# EUROPÄISCHE PATENTSCHRIFT

(11) **EP 1 205 341 B1**
(45) Veröffentlichungstag und Bekanntmachung des Hinweises auf die Patenterteilung: **11.07.2007**
(21) Anmeldenummer: 01125710.2
(22) Anmeldetag: 27.10.2001
(51) Int. Cl.: B60L 11/18, H01M 8/04

(54) **Brennstoffzellensystem und Verfahren zum Betreiben des Brennstoffzellensystems**
Fuel cell system and method of operating the fuel cell system
Système de pile à combustible et méthode de fonctionnement pour ce système de pile à combustible

(30) Priorität: 14.11.2000 DE 10056429
(43) Veröffentlichungstag der Anmeldung: 15.05.2002
(73) Patentinhaber: DaimlerChrysler AG, 70327 Stuttgart (DE)
(72) Erfinder: Autenrieth, Rainer, 71723 Grossbottwar (DE); Walter, Markus, 72555 Metzingen (DE); Konrad, Gerhard, Dr., 89081 Ulm (DE); Ledwig, Karsten, 35647 Waldsolms (DE); Niehues, Michael, 89073 Ulm (DE)

(56) Entgegenhaltungen:
- EP-A- 0 334 474
- JP-A- 4 082 169
- US-A- 5 714 874
- US-A- 5 780 980
- US-A- 5 964 309

## Beschreibung

Die Erfindung betrifft ein Brennstoffzellensystem und ein Verfahren zum Betreiben des Brennstoffzellensystems gemäß dem Oberbegriff der unabhängigen Ansprüche 1 und 8.

Bei üblichen Brennstoffzellensystemen, etwa in Brennstoffzellenfahrzeugen, wird die der Brennstoffzelle zugeführte Menge von Wasserstoff und Sauerstoff der gewünschten Brennstoffzellenleistung angepaßt, indem die Wasserstoff- und Sauerstoffmenge mit geeigneten Regelungs- oder Steuerverfahren eingestellt wird.

Aus der DE 195 40 824 A1 ist ein derartiges Brennstoffzellensystem bekannt.

Der Erfindung liegt die Aufgabe zugrunde, ein Brennstoffzellensystem anzugeben, bei dem der Aufwand für die Regelung oder Steuerung des Brennstoffzellensystems vereinfacht ist.

Diese Aufgabe wird bei einem Brennstoffzellensystem mit den Merkmalen des Anspruchs 1 und bei einem Verfahren mit den Merkmalen des Anspruchs 8 gelöst.

Erfindungsgemäß wird eine Brennstoffzelleneinheit abhängig von der Verfügbarkeit von Betriebsmitteln elektrisch aus- und eingeschaltet.

Der Vorteil ist, daß bei unterschiedlichen Lastanforderungen an die Brennstoffzelleneinheit keine aufwendige Regelung der Betriebsmittelversorgung notwendig ist. Besonders vorteilhaft ist dies für ein Brennstoffzellensystem mit einem Reformer.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren zeigen:
- Fig. 1: Ein typisches Strom-Spannungs-Kennlinienfeld einer Brennstoffzelle und
- Fig. 2: eine Prinzipdarstellung einer bevorzugten Vorrichtung zur Durchführung des Verfahrens.

Gemäß der Erfindung ist es möglich, ein Brennstoffzellensystem mit Reformer mit geringem Aufwand zu steuern oder zu regeln. Besonders günstig ist dabei, eine Batterie als Energiespeicher vorzusehen, die von dem Brennstoffzellensystem versorgt wird. Eine Steuerung mit DC/DC-Wandler wird in EP 0334474 beschrieben.

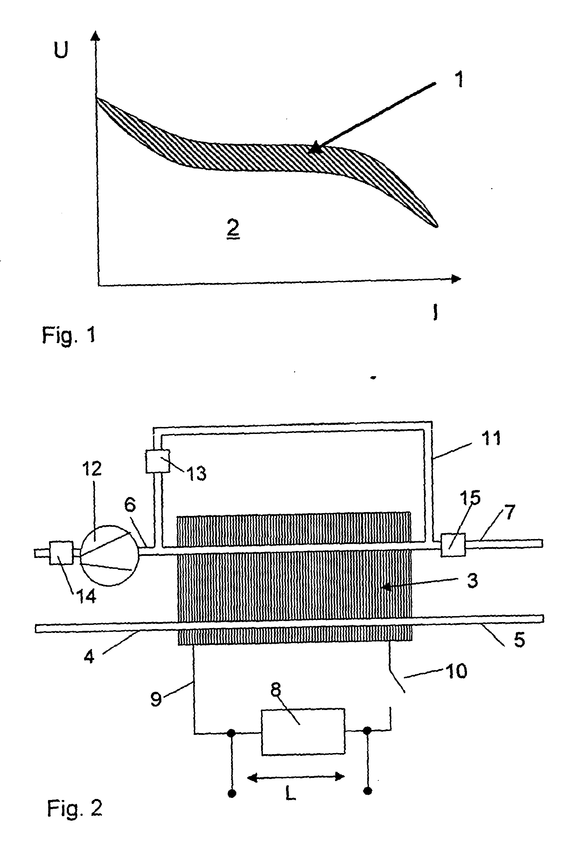

In Fig. 1 ist ein Kennlinienfeld einer Brennstoffzelle dargestellt. Der schraffierte Bereich 1 zwischen der oberen und der unteren Strom-Spannungs-Kennlinie stellt den erlaubten Bereich 1 dar, in dem eine Brennstoffzelle betrieben werden kann. Außerhalb des schraffierten Bereichs ist eine verbotene Zone 2, in der eine Brennstoffzelle nicht betreiben werden kann, bzw. bei Betrieb der Brennstoffzelle oder eines Brennstoffzellenstapels mit einer Mehrzahl von Zellen in diesem Bereich 2 kommt es innerhalb von kurzer Zeit zu einem Ausfall von Zellen, was zur Zerstörung der Zellen führt. Der Verlauf solcher charakteristischen Strom-Spannungs-Kennlinien kann bei vorgegebener Brennstoffzelleneinheit nur in sehr geringem Maße durch Variation der Betriebsparameter beeinflußt werden, typischerweise nur um 5-10%.

Üblicherweise muß neben dem Lastwiderstand der Brennstoffzelleneinheit auch das der Brennstoffzelleneinheit anodenseitig zugeführte Brennmittel, etwa Wasserstoff, und der kathodenseitig zugeführte Sauerstoff geregelt werden.

In Fig. 2 ist eine bevorzugte Anordnung gemäß der Erfindung dargestellt. Eine Brennstoffzelleneinheit 3 weist eine kathodenseitige Zuführleitung 4 zur Zufuhr von einem oxidierenden Medium, vorzugsweise Sauerstoff, zur Brennstoffzelleneinheit 3 und eine kathodenseitige Abführleitung 5 auf zur Abfuhr von kathodenseitigem Abgas aus der Brennstoffzelleneinheit 3, sowie eine anodenseitige Zuführleitung 6 zur Zufuhr von Brennmittel, vorzugsweise Wasserstoff, zur Brennstoffzelleneinheit 3 und eine anodenseitige Abführleitung 7 zur Abfuhr von anodenseitigem Abgas aus der Brennstoffzelleneinheit 3. Die Brennstoffzelleneinheit weist eine Mehrzahl von einzelnen Brennstoffzellen auf, die elektrisch parallel und/oder seriell miteinander verschaltet sein können. Zwischen Anodenraum und Kathodenraum der einzelnen Brennstoffzelle ist eine ionenleitende Membran angeordnet, welche z.B. Protonen von der Anode zur Kathode transportiert. Parallel zur Brennstoffzelleneinheit 3 ist eine Batterie 8 geschaltet. Die aufgrund der elektrochemischen Reaktion in der Zelle entstehende elektrische Leistung kann einem Lastwiderstand L, etwa einem Elektromotor oder anderen elektrischen Verbrauchern, zur Verfügung gestellt werden. Der Lastwiderstand L ist mit einem Stromkreis 9 mit der Brennstoffzelleneinheit 3 verbunden und parallel zur Brennstoffzelleneinheit 3 und zur Batterie 8 geschaltet. In dem Stromkreis 9 ist ein Schalter 10 vorgesehen.

Mittels des Schalters 10 kann die Brennstoffzelleneinheit 3 elektrisch eingeschaltet werden, wenn der Schalter 10 geschlossen wird, oder ausgeschaltet werden, wenn der Schalter 10 geöffnet wird.

Vorzugsweise ist der Schalter 10 ein elektronischer Schalter, der über das Ein- und Ausschalten einer Steuerspannung geschaltet wird. Zweckmäßigerweise wird ein Schalter gewählt, der sperrt, wenn keine Spannung anliegt und öffnet, wenn eine Spannung anliegt. Die Steuerspannung ist vorzugsweise pulsweitenmoduliert, wobei das Verhältnis von Schalter "auf" (Spannungspuls) zu Schalter "zu" (keine Spannung), d.h. der Abstand der Einschaltpulse der Steuerspannung sowie die Dauer der Einschaltpulse charakteristisch ist. Dieses Verhältnis wird dadurch bestimmt, ob ausreichend Brenngas, vorzugsweise Wasserstoff, vorhanden ist. Als Einschaltkriterium gilt "ausreichend Brenngas vorhanden", als Ausschaltkriterium gilt "zuwenig Brenngas vorhanden". Das Verhältnis von "Ein-Zuständen" und "Aus-Zuständen" kann aufgrund der aktuell vorhandenen Betriebsstoffmengen beeinflußt werden. Erhöht sich die Betriebsstoffmenge, so wird die Einschaltdauer verlängert, im umgekehrten Fall verkürzt. Günstig ist, daß die Frequenz des pulsweitenmodulierten Ansteuersignals so gewählt werden kann, daß es nur zu geringen Schwankungen in der Versorgung der Brennstoffzellen kommt und somit eine kontinuierliche oder quasikontinuierliche Regelung möglich ist.

Die Zufuhr des Brennmittels zur Brennstoffzelleneinheit 3 erfolgt anodenseitig über eine Zuführleitung 6; das anodenseitige Abgas wird über eine Abführleitung 7 aus der Brennstoffzelleneinheit 3 entfernt. Weitere Details des Brennstoffzellensystems, wie etwa Gaserzeugungssystem, Brennmitteltank, Abgasreinigung und dergleichen sind nicht dargestellt.

Die Anodenseite der Brennstoffzelleneinheit 3 weist eine Leitung 11 auf, welche die Anodenseite der Brennstoffzelleneinheit 3 überbrücken kann und welche als Rückführleitung verwendet werden kann. In der Rückführleitung kann eine Pumpe 12 vorgesehen sein, welche das Brennmittel in der Rückführleitung 11 im Kreis leitet. Als Pumpe 12 kann auch eine Jetpump vorgesehen sein, die zweckmäßigerweise in der Anodenzuführung 6 angeordnet ist. In der Rückführleitung 11 kann auch ein Ventil 13 vorgesehen sein, welches die Rückführleitung 11 absperrt oder freigibt. Alternativ oder zusätzliche kann auch ein nicht dargestellter Zwischenspeicher vorgesehen sein, in dem Brennmittel zwischengespeichert werden kann.

Auch auf der Kathodenseite kann eine solche Rückführleitung und/oder ein solcher Zwischenspeicher für das oxidierende Medium vorgesehen sein. Wenn die Brennstoffzelleneinheit 3 nur zu bestimmten Zeiten eingeschaltet ist, wird auch nur eine geringe Sauerstoff- bzw. Luftmenge benötigt. Es kann entsprechend Luft zugeführt und im Kreis oder auch durch eine entsprechende Absenkung auf eine niedrige, aber kontinuierliche Luft- oder Sauerstoffmenge.

Im folgenden wird die Erfindung anhand der Maßnahmen auf der Anodenseite der Brennstoffzelleneinheit 3 erläutert.

Gemäß der Erfindung wird bei einer Lastanforderung an die Brennstoffzelleneinheit 3, die mehr Brennmittel, vorzugsweise Wasserstoff, erfordert, als der Brennstoffzelleneinheit 3 momentan zur Verfügung steht, die Brennstoffzelleneinheit 3 elektrisch abgeschaltet. Dazu wird der Schalter 10 geöffnet. Während die Brennstoffzelleneinheit 3 ausgeschaltet ist, wird weiter solange das Brennmittel und/oder der Sauerstoff zugeführt, bis eine ausreichende Menge von Brennmittel und/oder Sauerstoff verfügbar ist, so daß die Brennstoffzelleneinheit 3 die angeforderte elektrische Leistung liefern könnte. Dazu wird das Brennmittel in der Rückführleitung 11 im Kreis geführt oder in den Zwischenspeicher geleitet. Dadurch erhöht sich z.B. der Druck des Wasserstoffs auf der Anodenseite. Die Brennmittelkonzentration wird schließlich so hoch, daß die Brennstoffzelleneinheit 3 nunmehr ausreichend elektrische Leistung zur Verfügung stellen kann. Der Schalter 10 kann wieder geschlossen werden, so daß die Brennstoffzelleneinheit 3 dann wieder elektrisch eingeschaltet ist.

Die Brennstoffzelleneinheit 3 wird also abhängig von der verfügbaren Menge eines Brennmittels elektrisch ausgeschaltet und eingeschaltet. Dabei wird das Brennmittel und/oder der Sauerstoff im abgeschalteten Zustand der Brennstoffzelleneinheit 3 solange zugeführt, bis eine ausreichende Menge von Brennmittel und/oder Sauerstoff für eine angeforderte Leistung der Brennstoffzelleneinheit 3 verfügbar ist. Die Dynamik des Systems wird im wesentlichen durch das Ein- und Ausschalten der Brennstoffzelleneinheit 3 erreicht.

Der Vorteil ist, daß die sehr teure und aufwendige Regelung für die Wasserstoffzufuhr entfallen kann. Aufgrund der kapazitiven Eigenschaften von Brennstoffzellen lassen sich kurzzeitig elektrische Ströme und elektrische Leistungen oberhalb der maximalen Brennstoffzellenleistung erreichen. Dadurch erreicht man z.B. höhere Anfahrmomente bei Elektromotoren, die von der Brennstoffzelleneinheit 3 elektrisch versorgt werden.

Vorzugsweise wird als Pumpe 12 eine Jetpump vorgesehen, die Wasserstoff umwälzt und die vom einströmenden Wasserstoff angetrieben wird.

Günstig ist, in der anodenseitigen Zuführleitung 6 einen Drucksensor 14 vorzusehen, so daß das Einschalten und/oder Ausschalten der Brennstoffzelleneinheit 3 abhängig vom Wasserstoffdruck erfolgt. Es ist auch möglich, das Einschalten und/oder Ausschalten der Brennstoffzelleneinheit 3 abhängig von der Wasserstoffmenge im Abstrom der Brennstoffzelleneinheit 3 vorzunehmen. Dazu kann ein Meßmittel 15 vorgesehen sein, welches den Wasserstoffgehalt oder den Wasserstoff-Fluß im Abstrom der Brennstoffzelleneinheit 3 mißt. Ein entsprechendes Signal wird an eine nicht dargestellte Steuereinheit gegeben, die anhand der momentanen Lastanforderung und des verfügbaren Brennmittels dann die Brennstoffzelleneinheit 3 ausschaltet oder einschaltet.

Die Einstellung der Sauerstoffzufuhr zur Brennstoffzelleneinheit 3 erfolgt vorzugsweise in Abhängigkeit vom Einschaltzustand der Brennstoffzelleneinheit 3. Vorteilhaft ist, zur Einstellung der Sauerstoffzufuhr zur Brennstoffzelleneinheit 3 dieselbe Steuerinformation wie für die Ansteuerung der Brennstoffzelleneinheit 3 einzusetzen, also etwa den Wasserstoffdruck in der Anodenzuführleitung 6 oder den Wasserstoffgehalt im Anodenabstrom 7. Die Zuführung kann im abgeschalteten Zustand der Brennstoffzelleneinheit 3 erfolgen, indem Sauerstoff oder Luft in einer kathodenseitigen Rückführleitung im Kreislauf geführt wird oder die Zufuhr wird verringert, aber kontinuierlich beibehalten.

Das erfindungsgemäße Verfahren und Brennstoffzellensystem ist besonders vorteilhaft in Verbindung mit einer Batterie 8, welche von der Brennstoffzelleneinheit 3 geladen wird, etwa in einem Brennstoffzellenfahrzeug. Die Brennstoffzelleneinheit 3 kann direkt mit der Batterie 8 verbunden werden. Nach Unterschreiten eines minimalen Ladestroms, d.h. bei vollgeladener Batterie 8, kann vorzugsweise die Brennstoffzelleneinheit 3 abgeschaltet und/oder die Versorgung der Brennstoffzelleneinheit 3 mit Brennmittel und/oder Sauerstoff unterbunden werden. Ein etwaig vorhandener Elektromotor für den Fahrzeugantrieb oder Nebenaggregate bzw. Bordstromversorgung eines Brennstoffzellenfahrzeugs können dann aus der Batterie 8 gespeist werden.

Das erfindungsgemäße Brennstoffzellensystem und das erfindungsgemäße Verfahren ist als sogenannte APU (auxiliary power unit) für die Versorgung von elektrischen Verbrauchern in einem Bordnetz geeignet, aber auch für die Versorgung von Antriebsmaschinen verwendbar.

Steht beispielsweise eine Leistungsanforderung des Bordnetzes von z.B. 1 kW an die Energieversorgung bestehend aus Brennstoffzellensystem und Batterie 8 an, kann diese z.B. alleine durch das Brennstoffzellensystem zur Verfügung gestellt werden. Steigt die Leistungsanforderung dann schlagartig, z.B. auf 2 kW, können Batterie 8 und Brennstoffzelleneinheit 3 darauf schnell reagieren, nicht aber das Gaserzeugungssystem bzw. der Reformer des Brennstoffzellensystems. Nach der Strom/Spannungscharakteristik der Brennstoffzelle sinkt die Spannung der Brennstoffzelle bei höherer Leistung. Ein Teil der höheren Leistungsanforderung kann von der Brennstoffzelle bereitgestellt werden, z.B. 1,5 kW, die restlichen 0,5 kW zusätzlich von der Batterie 8. Da jedoch der Brennstoffzelleneinheit 3 nicht genügend Wasserstoff vom Reformer nachgeliefert wird, verbraucht die Brennstoffzelleneinheit 3 zuviel Wasserstoff, und der Druck auf der Wasserstoffseite der Brennstoffzelleneinheit 3 sinkt. Fällt der Druck unter ein bestimmtes Maß, wird die Brennstoffzelleneinheit 3 elektrisch ausgeschaltet, so daß dann die gesamte Leistung aus der Batterie 8 entnommen wird. Der Reformer liefert aber nach wie vor Wasserstoff, so daß auf der Anodenseite der Druck wieder steigt. Nach Erreichen eines gewünschten Wasserstoffdruckwerts kann die Brennstoffzelleneinheit 3 wieder elektrisch zugeschaltet werden.

Beim Auftreten einer abrupt erhöhten Lastanforderung wird zumindest ein Teil der angeforderten elektrischen Leistung von der mit der Brennstoffzelleneinheit 3 elektrisch verbundenen Batterie 8 bereitgestellt, wobei die Brennstoffzelleneinheit 3 solange elektrische Leistung abgibt, bis die verfügbare Menge des Brennmittels unterhalb eines vorgegebenen ersten Schwellwerts fällt. Dann wird die Brennstoffzelleneinheit 3 elektrisch abgeschaltet und die Batterie 8 stellt die gesamte angeforderte Leistung bereit, wobei zumindest die Brennmittelzufuhr zur Brennstoffzelleneinheit 3 weiter aufrechterhalten wird. Dies geschieht solange, bis ein zweiter, oberer Schwellwert der verfügbaren Menge des Brennmittels erreicht ist, der vorzugsweise so hoch ist, daß die Brennstoffzelleneinheit 3 mehr elektrische Leistung bereitstellt, als von den elektrischen Verbrauchern L angefordert wurde. Die überschüssige Leistung wird zum Laden der Batterie 8 verwendet, wobei der Ladezustand der Batterie 8 vorzugsweise von einem Ladezustandssensor erfaßt und/oder der Ladestrom beobachtet wird.

Dieser Vorgang wiederholt sich periodisch. In dieser Zeit wird nun der Reformer nachgeregelt und erreicht nach Ablauf einer gewissen Zeitspanne eine Leistung, die einer elektrischen Leistung der Brennstoffzelleneinheit 3 von z.B. 2,2 kW entspricht, also höher ist als die eigentliche Lastanforderung von z.B. 2 kW. Damit ist es dann möglich, sowohl das Bordnetz zu versorgen, als auch die Batterie 8 wieder nachzuladen, so daß die vorherig entnommenen Energie wieder ausgeglichen wird. Mit zunehmendem Ladezustand der Batterie 8 wird dann die Leistung von Brennstoffzelleneinheit 3 und Reformer auf die eigentliche Lastanforderung der Verbraucher von z.B. 2 kW reduziert.

Da nur wenige Sensoren und Regler notwendig sind, ist eine erhebliche Kosteneinsparung im erfindungsgemäßen Brennstoffzellensystem möglich.

Durch die erfindungsgemäße Ansteuerung der Brennstoffzelleneinheit 3 über den Schalter 10 lassen sich über die Zeit gemittelt auch Betriebspunkte innerhalb der nicht erlaubten Bereiche 2 anfahren. Die Brennstoffzelleneinheit 3 sieht im Betrieb nur erlaubte Betriebszustände, im zeitliche Mittel über Phasen mit eingeschalteter und ausgeschalteter Brennstoffzelleneinheit 3 können sich jedoch rechnerisch auch Betriebszustände außerhalb des erlaubten Bereich gemäß Fig. 1 ergeben.

## Patentansprüche

1. Brennstoffzellensystem mit einer Brennstoffzelleneinheit (3) mit einer Anodenseite und einer Kathodenseite, einer anodenseitigen Zuführ- und Abführleitung (6, 7) zur Zufuhr von Brennmittel und zur Abfuhr von anodenseitigem Abgas, einer kathodenseitigen Zuführ- und Abführleitung (4, 5) zur Zufuhr von Sauerstoff und zur Abfuhr von kathodenseitigem Abgas,
**dadurch gekennzeichnet,**
**daß** Mittel (10) vorgesehen sind, um die Brennstoffzelleneinheit (3) abhängig von der verfügbaren Menge des Brennmittels elektrisch einzuschalten und auszuschalten.

2. Brennstoffzellensystem nach Anspruch 1,
**dadurch gekennzeichnet,**
**daß** eine Batterie (8) parallel zu der Brennstoffzelleneinheit (3) geschaltet ist.

3. Brennstoffzellensystem nach Anspruch 1,
**dadurch gekennzeichnet,**
**daß** Mittel (11, 12, 13, 14, 15) vorgesehen sind, die Versorgung der Brennstoffzelleneinheit (3) mit Brennmittel und/oder Sauerstoff im ausgeschalteten Zustand aufrechtzuerhalten.

4. Brennstoffzellensystem nach Anspruch 1,
**dadurch gekennzeichnet,**
**daß** ein Zwischenspeicher vorgesehen ist, um der Brennstoffzelleneinheit (3) zugeführtes Brennmittel und/oder Sauerstoff im abgeschalteten Zustand der Brennstoffzelleneinheit (3) zwischenzuspeichern.

5. Brennstoffzellensystem nach Anspruch 1,
**dadurch gekennzeichnet,**
**daß** eine Rückführleitung (11) an der Brennstoffzelleneinheit (3) vorgesehen ist, um Brennmittel im abgeschalteten Zustand der Brennstoffzelleneinheit (3) im Kreislauf zu führen.

6. Brennstoffzellensystem nach Anspruch 1,
**dadurch gekennzeichnet,**
**daß** in der Rückführleitung (11) und/oder in der Anodenzuleitung (6) eine Pumpe (12) vorgesehen ist.

7. Brennstoffzellensystem nach Anspruch 1,
**dadurch gekennzeichnet,**
**daß** ein anodenseitiger Brennmitteldruck als Steuergröße einer pulsweitenmodulierten Steuerung der Mittel (10) zum Schalten der Brennstoffzelleneinheit (3) vorgesehen ist.

8. Verfahren zum Betreiben eines Brennstoffzellensystems nach Anspruch 1,
**dadurch gekennzeichnet,**
**daß** eine Brennstoffzelleneinheit (3) in Abhängigkeit von verfügbaren Brennmittel und/oder Sauerstoff elektrisch eingeschaltet oder ausgeschaltet wird.

9. Verfahren nach Anspruch 8,
**dadurch gekennzeichnet,**
**daß** das Brennmittel und/oder der Sauerstoff im abgeschalteten Zustand der Brennstoffzelleneinheit (3) über eine Rückführleitung (11) solange im Kreis geführt und weiteres Brennmittel und/oder weiterer Sauerstoff zugeführt wird, bis anodenseitig eine ausreichende Menge von Brennmittel und/oder kathodenseitig eine ausreichende Menge von Sauerstoff für eine angeforderte Leistung der Brennstoffzelleneinheit (3) verfügbar ist.

10. Verfahren nach Anspruch 8,
**dadurch gekennzeichnet,**
**daß** das Einschalten und/oder Ausschalten der Brennstoffzelleneinheit (3) abhängig vom Wasserstoffdruck erfolgt.

11. Verfahren nach Anspruch 8,
**dadurch gekennzeichnet,**
**daß** das Einschalten und/oder Ausschalten der Brennstoffzelleneinheit (3) abhängig von der Wasserstoffmenge im Abstrom der Brennstoffzelleneinheit (3) erfolgt.

12. Verfahren nach Anspruch 8,
**dadurch gekennzeichnet,**
**daß** die Einstellung der Sauerstoffzufuhr zur Brennstoffzelleneinheit (3) in Abhängigkeit vom Einschaltzustand der Brennstoffzelleneinheit (3) erfolgt.

13. Verfahren nach Anspruch 8,
**dadurch gekennzeichnet,**
**daß** elektrische Verbraucher im ausgeschalteten Zustand der Brennstoffzelleneinheit (3) von einer Batterie (8) versorgt werden.

14. Verfahren nach Anspruch 13,
**dadurch gekennzeichnet,**
**daß** der Ladezustand der Batterie (8) erfaßt wird und die Brennstoffzelleneinheit (3) zusätzlich Leistung bereitstellt, um die Batterie (8) aufzuladen.

15. Verfahren nach Anspruch 13,
**dadurch gekennzeichnet,**
**daß** nach Unterschreiten eines minimalen Ladestroms der Batterie (8) die Brennstoffzelleneinheit (3) abgeschaltet und/oder die Versorgung der Brennstoffzelleneinheit (3) mit Brennmittel und/oder Sauerstoff unterbunden wird.

## Claims

1. Fuel cell system having a fuel cell unit (3) with an anode side and a cathode side, an anode-side delivery and discharge line (6, 7) for delivering fuel and for discharging anode-side exhaust gas, a cathode-side delivery and discharge line (4, 5) for delivering oxygen and for discharging cathode-side exhaust gas, **characterised in that** means (10) are provided for electrically switching the fuel cell unit (3) on and off as a function of the amount of fuel available.

2. Fuel cell system according to Claim 1, **characterized in that** a battery (8) is connected in parallel with the fuel cell unit (3).

3. Fuel cell system according to Claim 1, **characterized in that** means (11, 12, 13, 14, 15) are provided for sustaining the supply of fuel and/or oxygen to the fuel cell unit (3) when it is switched off.

4. Fuel cell system according to Claim 1, **characterized in that** a buffer is provided in order temporarily store fuel and/or oxygen fed to the fuel cell unit (3) when the fuel cell unit (3) is switched off.

5. Fuel cell system according to Claim 1, **characterized in that** a return line (11) is provided on the fuel cell unit (3), in order to recycle fuel in a circuit when the fuel cell unit (3) is switched off.

6. Fuel cell system according to Claim 1, **characterized in that** a pump (12) is provided in the return line (11) and/or in the anode feed line (6).

7. Fuel cell system according to Claim 1, **characterized in that** an anode-side fuel pressure is provided as a control variable of a pulsewidth-modulated controller of the means (10) for switching the fuel cell unit (3).

8. Method for operating a fuel cell system according to Claim 1, **characterized in that** a fuel cell unit (3) is electrically switched on or off as a function of available fuel and/or oxygen.

9. Method according to Claim 8, **characterized in that** when the fuel cell unit (3) is switched off, the fuel and/or the oxygen is recycled in a circuit via a return line (11) and further fuel and/or further oxygen is delivered until a sufficient amount of fuel on the anode side and/or a sufficient amount of oxygen on the cathode side is available for a required power of the fuel cell unit (3).

10. Method according to Claim 8, **characterized in that** the fuel cell unit (3) is switched on and/or off as a function of the hydrogen pressure.

11. Method according to Claim 8, **characterized in that** the fuel cell unit (3) is switched on and/or off as a function of the amount of hydrogen in the exhaust flow of the fuel cell unit (3).

12. Method according to Claim 8, **characterized in that** the oxygen delivery to the fuel cell unit (3) is adjusted as a function of the switched-on state of the fuel cell unit (3).

13. Method according to Claim 8, **characterized in that** electrical loads are supplied by a battery (8) when the fuel cell unit (3) is switched off.

14. Method according to Claim 13, **characterized in that** the state of charge of the battery (8) is registered and the fuel cell unit (3) provides additional power in order to charge the battery (8).

15. Method according to Claim 13, **characterized in that** when a minimum charging current of the battery (8) is fallen below, the fuel cell unit (3) is switched off and/or the fuel and/or oxygen supply of the fuel cell unit (3) is stopped.

## Revendications

1. Système de cellule à combustible qui présente une unité de cellule à combustible (3) doté d'un côté anodique et d'un côté cathodique, d'un conduit d'amenée et d'un conduit d'évacuation (6, 7) disposés du côté anodique et destinés à amener le combustible et à évacuer le gaz épuisé du côté anodique, d'un conduit d'amenée et d'un conduit d'évacuation (4, 5) disposés du côté cathodique et destinés à amener l'oxygène et à évacuer le gaz épuisé du côté cathodique,
**caractérisé en ce que**
des moyens (10) sont prévus pour brancher et débrancher électriquement l'unité (3) de cellule à combustible indépendamment de la quantité disponible de combustible.

2. Système de cellule à combustible selon la revendication 1, **caractérisé en ce qu'**une batterie (8) est raccordée en parallèle à l'unité (3) de cellule à combustible.

3. Système de cellule à combustible selon la revendication 1, **caractérisé en ce que** des moyens (11, 12, 13, 14, 15) sont prévus pour maintenir l'alimentation de l'unité (3) de cellule à combustible en combustible et/ou en oxygène lorsqu'elle est débranchée.

4. Système de cellule à combustible selon la revendication 1, **caractérisé en ce qu'**un réservoir intermédiaire est prévu pour conserver le combustible apporté à l'unité (3) de cellule à combustible et/ou l'oxygène lorsque l'unité (3) de cellule à combustible est débranchée.

5. Système de cellule à combustible selon la revendication 1, **caractérisé en ce qu'**un conduit de renvoi (11) vers l'unité (3) de cellule à combustible est prévu pour maintenir en circuit fermé le carburant lorsque l'unité (3) de cellule à combustible est débranchée.

6. Système de cellule à combustible selon la revendication 1, **caractérisé en ce qu'**une pompe (12) est prévue dans le conduit de renvoi (11) et/ou dans le conduit (6) d'amenée à l'anode.

7. Système de cellule à combustible selon la revendication 1, **caractérisé en ce que** la pression du combustible du côté anodique est utilisée comme grandeur de commande pour une commande à modulation de largeur d'impulsion des moyens (10) de branchement de l'unité (3) de cellule à combustible.

8. Procédé d'utilisation d'un système de cellule à combustible selon la revendication 1, **caractérisé en ce qu'**une unité (3) de cellule à combustible est branchée ou débranchée électriquement en fonction de la quantité disponible de combustible et/ou d'oxygène.

9. Procédé selon la revendication 8, **caractérisé en ce que** lorsque l'unité (3) de cellule à combustible est débranchée, le combustible et/ou l'oxygène sont maintenus en circuit fermé par un conduit de renvoi (11) et **en ce qu'**un supplément de combustible et/ou un supplément d'oxygène sont apportés jusqu'à ce que du côté anodique une quantité suffisante de combustible soit disponible et/ou que du côté cathodique une quantité suffisante d'oxygène soit disponible pour que l'unité (3) de cellule à combustible délivre la puissance imposée.

10. Procédé selon la revendication 8, **caractérisé en ce que** le branchement et/ou le débranchement de l'unité (3) de cellule à combustible ont lieu en fonction de la pression d'hydrogène.

11. Procédé selon la revendication 8, **caractérisé en ce que** le branchement et/ou le débranchement de l'unité (3) de cellule à combustible ont lieu en fonction du débit d'hydrogène dans l'écoulement de sortie de l'unité (3) de cellule à combustible.

12. Procédé selon la revendication 8, **caractérisé en ce que** le réglage de l'apport d'oxygène à l'unité (3) de cellule à combustible s'effectue en fonction de l'état de branchement de l'unité (3) de cellule à combustible.

13. Procédé selon la revendication 8, **caractérisé en ce que**, lorsque l'unité (3) de cellule à combustible est débranchée, les consommateurs électriques sont alimentés par une batterie (8).

14. Procédé selon la revendication 13, **caractérisé en ce que** l'état de la charge de la batterie (8) est détecté et **en ce que** l'unité (3) de cellule à combustible délivre une puissance supplémentaire pour recharger la batterie (8).

15. Procédé selon la revendication 13, **caractérisé en ce que** lorsque le courant de charge de la batterie (8) n'atteint pas un courant de charge minimum, l'unité (3) de cellule à combustible est débranchée et/ou l'alimentation de l'unité (3) de cellule à combustible en combustible et/ou en oxygène est interrompue.
